# EUROPEAN PATENT SPECIFICATION

(11) **EP 3 519 174 B1**
(45) Date of publication and mention of the grant of the patent: **16.12.2020**
(21) Application number: 17781208.8
(22) Date of filing: 29.09.2017
(51) Int. Cl.: B29D 30/06

(54) **MOLDING ELEMENT FOR MANUFACTURING A NOISE REDUCING TREAD**
FORMELEMENT ZUR HERSTELLUNG EINER GERÄUSCHREDUZIERENDEN LAUFFLÄCHE
ÉLÉMENT DE MOULAGE POUR LA FABRICATION D'UNE BANDE DE ROULEMENT RÉDUCTRICE DE BRUIT

(30) Priority: 29.09.2016 WO PCT/JP2016/079876
(43) Date of publication of application: 07.08.2019
(73) Proprietor: Compagnie Générale des Etablissements Michelin, 63000 Clermont-Ferrand (FR)
(72) Inventor: PENGSALOONG, Khotchakorn, Tokyo 163-1073 (JP); ROTY , Gael, Tokyo 163-1073 (JP)
(74) Representative: Regimbeau
(86) International application number: PCT/JP2017/035543
(87) International publication number: WO 2018/062507

(56) References cited:
- WO-A1-2010/146180
- WO-A1-2013/120783
- WO-A1-2016/092095
- JP-A- 2000 102 925
- JP-A- 2002 234 313
- US-A- 6 119 744
- US-A1- 2002 134 202
- US-B1- 6 196 818

## Description

### [Technical Field]

The present invention relates to a molding element, in particular to a molding element for a mold used for manufacturing a tread for a tire having a closing device in a groove.

### [Background Art]

A groove resonance is generated by occurrence of resonance in an air column defined between a groove in a tread and a road surface in contact with the tire. The frequency of this groove resonance is dependent on a length of the air column formed between groove and the road surface in the contact patch.

This groove resonance has a consequence in an interior noise and an exterior noise on a vehicle equipping such tires, a frequency of which interior and exterior noise is often at around 1 kHz where human ear is sensitive.

In order to reduce such groove resonance, it is known to provide a plurality of closing device in the form of a thin flexible fence made of rubber-based material in each groove. It is effective that each flexible fence covers all or at least major part of the sectional area in the groove. Each flexible fence can extend from a groove bottom, or from at least one of groove sidewalls delimiting such groove. Because being relatively thin, each flexible fence has to bend for opening the groove section to flow water on the road surface, in particular on the wet road.

Thanks to such flexible fences, the length of the air column is reduced so as to be shorter than the total length of groove in a contact patch, which leads to change the frequency of groove resonance. This change of resonance frequency makes the sound generated by the groove resonance less sensitive to human ear.

For preserving function of drainage, in case of driving in rainy weather, it is necessary for such flexible fence to bend in a suitable way under the action of the pressure of water for opening the section of the groove. Several solutions have been proposed using this type of closing device to reduce groove resonance of the groove.

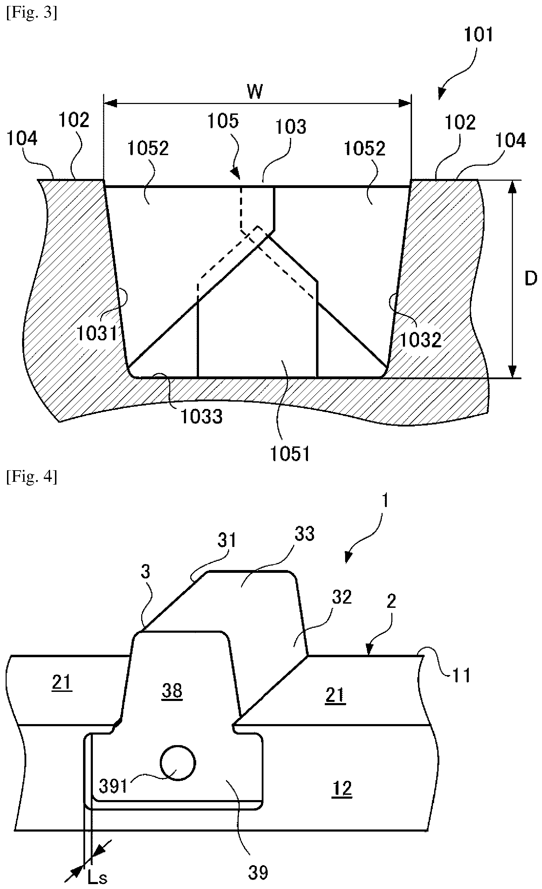

WO2013/178473 discloses, in Fig.4, a method for manufacturing a tread for a tire provided with at least one flexible wall (closing device) in a groove, the method comprising steps of molding the tread with a groove and at least one connecting element arranged inside the groove transversely so as to connect sidewalls of the groove, and cutting the connecting element at the junction with each the sidewall of the groove. However with such method productivity of such tread is low, as the method requires additional process of cutting the connecting element after molding.

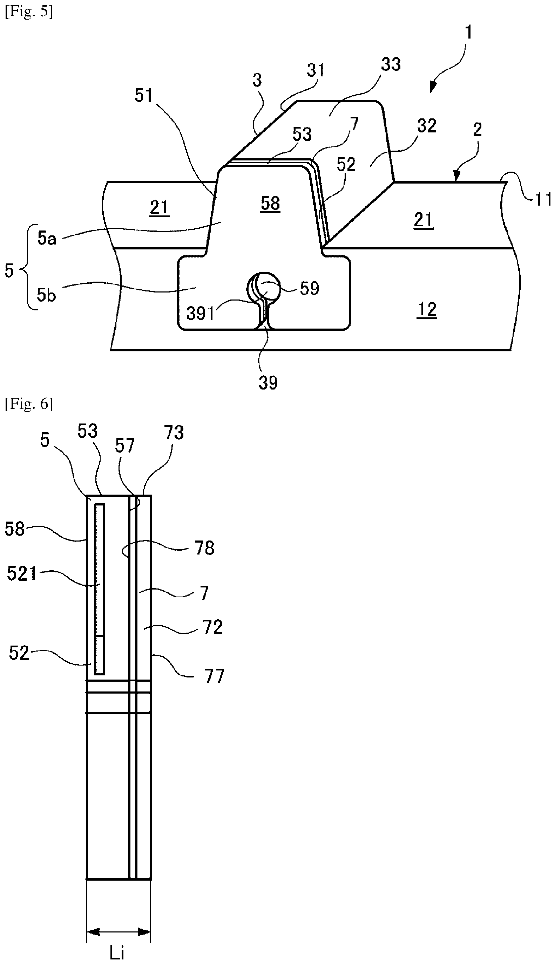

WO2013/120783 discloses, in Fig.5, a mold for molding a tread for a tire provided with at least one closing device, the mold comprising two cavities created in two added elements for the flexible fence separated by a first element, the assembly made up of the first element and the added elements forms an insert.

### [Citation List]

### [Patent Literature]

[PTL 1]
   WO2013/178473
[PTL 2]
   WO2013/120783

However, since the insert comprises several parts, a thickness of the insert and a thickness of a space receiving such the insert in a molding element may be different due to accumulation of a thickness variation of each part of the insert even all the parts forming the insert are within their thickness tolerance. If the thickness of the insert is thicker than the thickness of the space receiving such the insert, the insert may not be able to be received in the space, or a tread after curing may have a rubber flashing on its contact face because the insert may disturb a complete contact between the molding elements. If the thickness of the insert is thinner than the thickness of the space receiving such the insert, a tread after curing may have a rubber flashing in a groove close to the closing device. Such the problem becomes more remarkable when each the parts in the insert is treated with an anti-sticking coating for better demolding; need to consider a tolerance of a thickness of the anti-sticking coating either. Therefore, it is required to provide element to absorb such the difference in thickness between the insert and the space for receiving the insert in the molding element for better quality of the tread with the flexible fence of the closing device after curing without impacting productivity of such the molding element.

### Definitions:

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "mold" means a collection of separate molding elements which, when brought closer towards one another, delimit a toroidal molding space.

A "molding element" of a mold means part of a mold. A molding element is, for example, a mold segment.

A "molding surface" of a molding element means a surface of the mold that is intended to mold a surface of the tread.

A "groove" is a space between two rubber faces/sidewalls which do not contact between themselves under usual rolling condition connected by another rubber face/bottom. A groove has a width and a depth.

It is thus an object of the invention to provide a molding element for a mold used for manufacturing a tread of a tire, such molding element can improve quality of the tread provided with of the flexible fence of the closing device after curing while ensuring productivity of such the molding element.

### [Summary of Invention]

The present invention provide a molding element for a mold used for manufacturing a tread of a tire having a plurality of contacting element delimited by a plurality of grooves, the molding element having a molding surface for forming a contact face of the contacting elements intended to come into contact with ground during rolling and a groove forming rib portion for forming the groove between adjacent contacting elements comprising two opposed rib side faces for forming two opposed groove side faces and a rib top face connecting two rib side faces for forming a groove bottom, the groove forming rib portion comprising at least one space of a depth Ls opening to at least one of the rib side faces and/or to the rib top face and an insert being received in the space for forming a portion of the groove and a closing device in the groove, the insert is received in the space together with at least one spacer in a form of a leaf spring, a disc spring, a flat spring or a combination of these springs, the insert and the spacer before being received into the space having a total thickness Li, the spacer has at least two contact faces intended to be in contact with the insert and/or a face of the groove forming rib portion defining to the space, the spacer has no surface facing to a slit in the insert for forming a flexible fence of the closing device.

This arrangement improves quality of a tread provided with a plurality of flexible fence of a closing device in a groove while ensuring good productivity of such the mold element.

Since the insert is received in the space together with at least one spacer in a form of a leaf spring, a disc spring, a flat spring or a combination of these springs, a difference in thickness between the insert and a space receiving the insert in a molding element can be filled up or compensated by spring characteristics of the spacer leading better quality of the tread with the flexible fence of the closing device as the spacer in the form of the leaf spring, the disc spring, the flat spring or the combination of these springs would be compressed and deformed when received in the space and changes its form to fill a gap between the insert and the molding element. As the difference in thickness between the insert and the space receiving the insert in the molding element can be filled up or compensated thanks to the spring characteristics of the spacer, productivity of the molding element is maintained.

Since the spacer has at least two contact faces intended to be in contact with the insert and/or a face of the groove forming rib portion facing to the space, a gap between the spacer and the insert and/or between the spacer and a face of the groove forming rib portion facing to the space can easily be maintained for not having a rubber flashing not only on a contact face but also in a groove close to the closing device leading further better quality of the tread with the flexible fence of the closing device.

In another preferred embodiment, the total thickness Li of the insert and the spacer before being received into the space is larger than or equal to the depth Ls of the space, and a difference between the total thickness Li of the insert and the spacer before being received into the space and the depth Ls of the space is smaller than or equal to 1.0mm.

If this gap is more than 1.0mm, deformation of the spacer due to compression upon being received into the space with the insert may affect formation of the groove after curing, or may affect a slit in the insert for forming the flexible fence of the closing device resulting low quality of the tread after curing.

This gap between the total thickness Li of the insert and the spacer before being received into the space and the depth Ls of the space is preferably greater than or equal to 0.0mm and smaller than or equal to 0.5mm, more preferably smaller than or equal to 0.3mm and still more preferably smaller than or equal to 0.2mm.

In another preferred embodiment, a gap between the insert and the spacer when received into the space is smaller than or equal to 0.05mm.

According to this arrangement, it is possible to have further high quality of the tread with the flexible fence of the closing device as it is possible to avoid a rubber flashing from such the gap after curing.

In another preferred embodiment, the insert is received in the space together with the spacer and at least one supporting plate.

According to this arrangement, it is possible to have further high quality of the tread with the flexible fence of the closing device as it is possible to achieve improved contact between the insert and the spacer and the molding element by using deformable portion (the spacer) and non-deformable portion (the supporting plate) separated each other.

In case the insert is provided together with the spacer and the supporting plate, the total thickness Li of the insert and the spacer should also consider the supporting plate in its length.

### [Brief Description of Drawings]

Other characteristics and advantages of the invention arise from the description made hereafter in reference to the annexed drawings which show, as nonrestrictive examples, the embodiment of the invention.

In these drawings:
[Fig. 1]

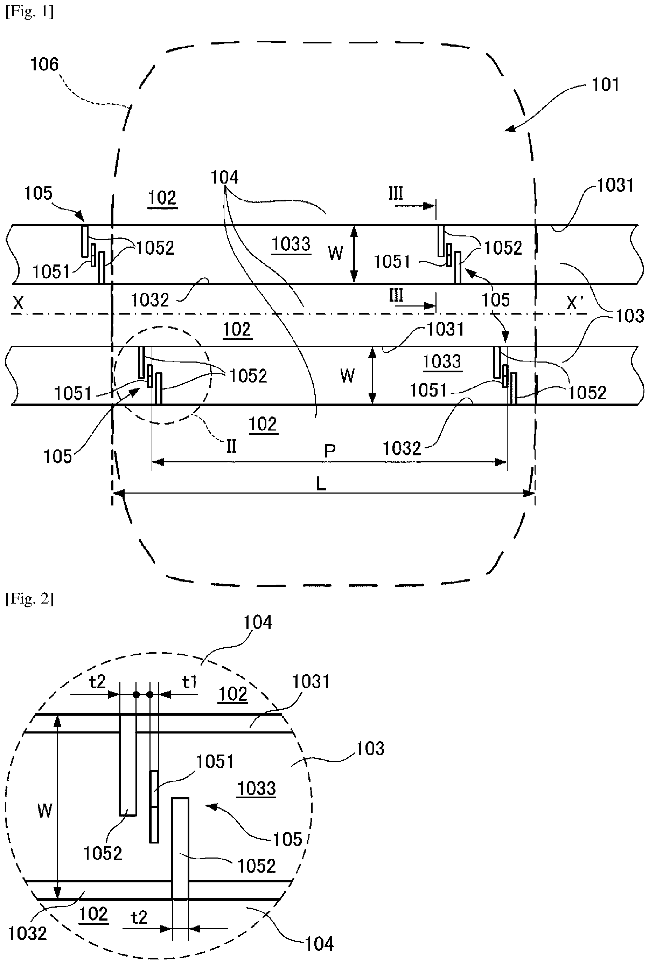

   Fig.1 is a schematic plan view of a tread for a tire molded with a mold comprising a molding element according to a first embodiment of the present invention;
[Fig. 2]
   Fig.2 is an enlarged schematic plan view showing a portion indicated as II in Fig. 1;
[Fig. 3]
   Fig.3 is a schematic cross sectional view taken along line III-III in Fig.1;
[Fig. 4]
   Fig.4 is a schematic perspective view of a portion of the molding element without an insert or a spacer according to the first embodiment of the present invention;
[Fig. 5]
   Fig.5 is a schematic perspective view of a portion of the molding element with the insert and the spacer according to the first embodiment of the present invention;
[Fig. 6]
   Fig.6 is a schematic side view of the insert with the spacer before being received in a space according to the first embodiment of the present invention;
[Fig. 7]

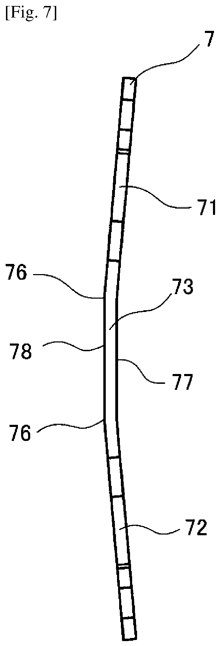

   Fig.7 is a schematic top view of the spacer according to the first embodiment of the present invention;
[Fig. 8]

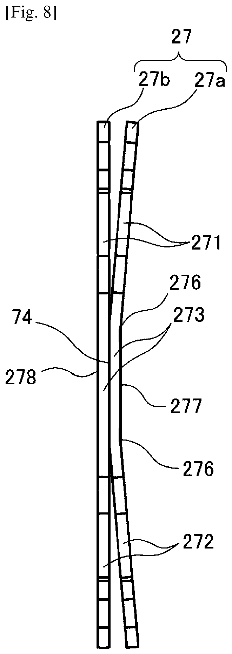

   Fig.8 is a schematic top view of a spacer according to a second embodiment of the present invention;
[Fig. 9]

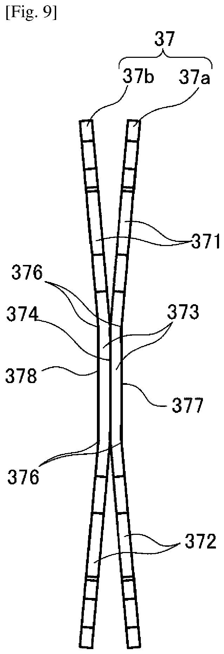

   Fig.9 is a schematic top view of a spacer according to a third embodiment of the present invention;
[Fig. 10]

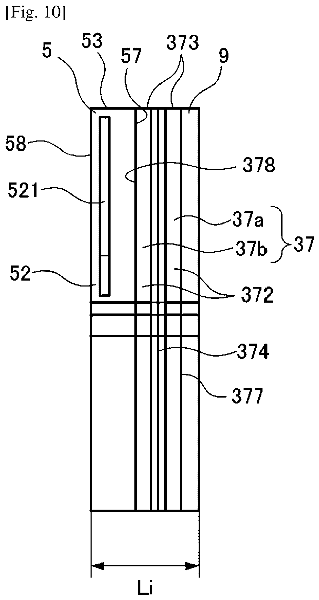

   Fig. 10 is a schematic side view of the insert with the spacer and a supporting plate before receiving in a space according to the third embodiment of the present invention;

### [Description of Embodiments]

Preferred embodiments of the present invention will be described below referring to the drawings.

A molding element 1 for a mold used for manufacturing a tread 101 of a tire, a mold comprising the molding element 1, and a tread 101 molded and vulcanized using the mold according to a first embodiment of the present invention will be described referring to Figs. 1 to 7.

Fig.1 is a schematic plan view of a tread for a tire molded with a mold comprising a molding element according to the first embodiment of the present invention. Fig.2 is an enlarged schematic plan view showing a portion indicated as II in Fig.1. Fig.3 is a schematic cross sectional view taken along line III-III in Fig. 1. Fig.4 is a schematic perspective view of a portion of the molding element without an insert or a spacer according to the first embodiment of the present invention. Fig.5 is a schematic perspective view of a portion of the molding element with the insert and the spacer according to the first embodiment of the present invention. Fig.6 is a schematic side view of the insert with the spacer before being received in a space according to the first embodiment of the present invention. Fig.7 is a schematic top view of the spacer according to the first embodiment of the present invention.

The tread 101 is a tread for a tire having dimension 205/55R16 and comprises a contact face 102 intended to come into contact with the ground during rolling, a plurality of grooves 103 extending in a tire circumferential direction indicated as XX'. The groove 103 is delimited by two groove side faces 1031, 1032 facing each other and being connected by a groove bottom 1033. The groove 103 has a width W at a level of the contact face 102 and a depth D (as shown in Fig.3).

As shown in Fig.1, a contact patch 106 has a contact patch length L in a tire circumferential direction when the tire with the tread 101 is mounted onto its standard rim and inflated at its nominal pressure and its nominal load is applied. According to 'ETRTO Standard Manual 2016' the standard rim for this size is 6.5J, the nominal pressure is 250kPa and the nominal load is 615kg.

As shown in Fig.1, in the groove 103, a plurality of closing device 105 is provided. The closing device 105 comprises one first flexible fence 1051 and two second flexible fences 1052 for dividing an air column created between the ground and the groove 103 in the contact patch 106 during rolling. Closing devices 105 are provided at a regular interval of distance P in the tire circumferential direction in the groove 103. The distance P is preferably shorter than the contact patch length L as to at least one closing device 105 in each groove 103 is always located in the contact patch 106 during rolling.

The first flexible fence 1051 has a thickness of t1 and extends from the groove bottom 1033 of the groove 103. Two second flexible fences 1052 have a thickness of t2 and extend from each of the opposite groove sidewalls 1031, 1032. Two second flexible fences 1052 in the same closing device 105 are offset each other in a circumferential direction in the groove 103. The first flexible fence 1051 is placed at a position circumferentially between two second flexible fences 1052, 1052 and distant from first flexible fence 1051 in circumferential direction (a direction along which the groove 103 extends) in the groove 103, as shown in Fig.2.

The thickness t1 of the first flexible fence 1051 is thinner than the thickness t2 of the second flexible fence 1052, as shown in Fig.2. The first and the second flexible fences 1051, 1052 partly overlap in a circumferential direction (in sectional view of the groove 103), and the two second flexible fences 1052, 1052 also overlap partly in a circumferential direction (in sectional view of the groove 103). The first and the second flexible fences 1051, 1052 cover at least equal to 70% of the cross sectional area of the groove 103, as shown in Fig.3.

As shown in Fig.3, the first flexible fence 1051 has a pentagon shape extending from the groove bottom 1033 toward radially outward direction of the tread 101. The width of the first flexible fence 1051 is less than the width of the groove bottom 1033 at its bottom and the height of the first flexible fence 1051 is less than the depth D of the groove 103.

Further, a radially inward edge of the second flexible fence 1052 extends obliquely upwardly from the groove sidewall 1031, 1032 so as to form a triangular space thereunder with the groove bottom 1033. A radially outward portion of the second flexible fence 1052 extends substantially parallel to the contact face 102. A radially outer edge of the second flexible fence 1052 extends substantially parallel to the contact face 102. The axial length (width) of the second flexible fence 1052 is less than the width W of the groove 103.

The tread 101 has the same structure as the conventional tread except for an arrangement regarding the closing device 105 and is intended to be applied to a conventional pneumatic radial, non-radial and other non-pneumatic tire. Thus, description of the internal construction of the tread 101 will be omitted.

The groove 103 is provided with the plurality of closing device 105 each covering at least equal to 70% of the radial cross sectional area of the groove 103. Therefore, the length of the air column formed by the groove 103 in the contact patch 106 is shifted to a length whose groove resonance peak is outside of the frequency audible range for the human ear. Thus, groove resonance due to air column resonance of the groove 103 can be harmless.

The flexible fences of the closing device 105 are provided so as to be distant each other with the offset in a direction along which the groove 103 extends. Therefore, it is possible to effectively improve groove resonance due to air column as a sound wave generated by groove resonance has difficulty to propagate between each the flexible fences of the closing device 105.

The closing device 105 includes one first flexible fence 1051 and two second flexible fences 1052 and each of the second flexible fences 1052 extends from each of opposite groove sidewalls 1031, 1032. Therefore, it is possible to effectively cover as broader cross sectional area of the groove 103 as possible by the closing device 105, while maintaining good productivity of the tread 101 with the flexible fences as closing device 105, as the sectional area covered by each flexible fence can be reduced, resulting in higher flexibility of an arrangement of the first and the second flexible fences 1051, 1052.

The first flexible fence 1051 and the second flexible fence 1052 of the closing device 105 overlap partly in a circumferential direction (in sectional view of the groove 103). Also, two second flexible fences 1052 of the closing device 105 overlap partly in a circumferential direction (in sectional view of the groove 103). Therefore, it is possible to further effectively attenuate groove resonance due to air column resonance of the groove 103, as the sound wave generated by groove resonance has more difficulty to propagate between each the flexible fences of the closing device 105.

The thickness t1 of the first flexible fence 1051 is thinner than the thickness t2 of the second flexible fence 1052. It is possible to have easier bending of the first flexible fence 1051 even with reduced groove depth, which results further improvement on drainage capability.

The offset between the flexible fences 1051, 1052 of the closing device 105 may be different for each locations, and the thickness t2 of the second flexible fence 1052 may have different thickness one another.

Next, a molding element 1 for a mold used for manufacturing the tread 101 will be described referring to Figs.4, 5, 6 and 7.

As shown in Fig.4, the molding element 1 has a base portion 2 having a molding surface 21 intended to mold the contact face 102 of the contacting element 104. The base portion 2 has two side faces 11, 12 facing to circumferentially opposed directions. These side faces 11, 12 define circumferential extremities of the molding element 1.

In use, one side face 11 or 12 of one molding element 1 is contacted to the other side face 12 or 11 of the adjacent molding elements to form a mold.

As shown in Fig.4, the molding element 1 also has a groove forming rib portion 3. The groove forming rib portion 3 has a trapezoid cross section and radially integrally extends from the molding surface 21 of the base portion 2 in a radially inward direction of the molding element 1.

The groove forming rib portion 3 includes two opposed rib side faces 31, 32 intended to mold two opposed groove side faces 1031, 1032, and a rib top face 33 intended to mold a bottom of the groove 1033. In case plurality of groove forming rib portions 3 is provided in one molding element 1, a radial position of the rib top face 33 can be the same among the these groove forming rib portions 3, or can be different among the these groove forming rib portions 3.

The circumferential length of the groove forming rib portion 3 is shorter than that of the base portion 2 by depth Ls. As shown in Fig.4, a circumferential end surface 38 of the groove forming rib portion 3 is placed at a position backwardly from the side face 12 of the base portion 2 by depth Ls. Further, a rectangular area in the side face 12 below (or radially outwardly of) the groove forming rib portion 3 is backwardly offset from the side face 12 of the base portion 2 by depth Ls so as to form a space 39, specifically a rectangular recessed space 39 having depth Ls.

The molding element 1 also comprises an insert 5 including an upper portion 5a having a trapezoid cross section corresponding to that of the groove forming rib portion 3 and a lower portion 5b having a rectangular cross section corresponding to that of the rectangular recessed space 39, as shown in Fig. 5.

The insert 5 is fixedly secured to the base portion 2 and the groove forming rib portion 3 together with a spacer 7 such that the spacer 7 abuts against the circumferential end surface 38 of the groove forming rib portion 3 and the lower portion 5b is received in the rectangular recessed space 39, as shown in Fig.5.

Total thickness of the insert 5 and the spacer 7 after received in the space 39 is the same as the above offset depth Ls of the circumferential end surface 38 of the groove forming rib portion 3 and the depth Ls of the rectangular recessed space 39. Therefore, an outer surface 58 of the insert 5 is flush with the side face 12 of the base portion 2.

The insert 5 and the spacer 7 are fixed to the groove forming rib portion 3 by a fixing means such that the spacer is placed between the insert 5 and the circumferential end surface 38 of the groove forming rib portion 3 and such that a screw extending through a hole 391 in a groove forming rib portion 3 and a hole 59 in the insert 5.

The insert 5 and the spacer 7 may be fixed to the groove forming rib portion 3 by other manner such as welding, gluing, etc. In this case, the holes 59, 391 may not be provided.

The insert 5 and the spacer 7 may be fixed to the groove forming rib portion 3 in a reverse order, that is to say the insert 5 is fixedly secured directly to the base portion 2 and the groove forming rib portion 3 such that the upper portion 5a of the insert 5 abuts against the circumferential end surface 38 of the groove forming rib portion 3.

The insert 5 may be sandwiched by two spacers 7, or multiple numbers of spacer 7 may be provided at the same time. In such the case, each spacer 7 may have same or different thickness.

The insert 5 and the spacer 7 can be placed in any position in the groove forming rib portion 3. In case a space for receiving the insert 5 and the spacer 7 is provided at a position which is not facing to the side face 11, 12 of the molding element 1, the insert 5 together with the spacer 7 can be placed so as to be disclosed in WO2010/146180A1, for example.

As shown in Fig.6, the insert 5 can be integrally provided with the spacer 7. A surface 57 of the insert 5 contacts with a surface 78 of the spacer 7 between two bended portions 76, 76 before being received in the space 39, as shown in Fig.7, thus creating a small space between the insert 5 and the spacer 7 outward of the bended portion 76 of the spacer 7. When the insert 5 is received in the space 39 together with the spacer 7, the spacer 7 changes its shape to almost or completely flat shape, thus the surface 57 of the insert 5 contacts almost completely with the surface 78 of the spacer 7.

An insert top face 53 of the insert 5 which face has a slit (not shown) for molding the first flexible fence 1051 is provided so as to be flush with a spacer top face 73 when the insert 5 is received in the space 39 together with the spacer 7. An insert side face 52 of the insert 5 which face has a slit 521 for molding the second flexible fence 1052 is provided so as to be flush with a spacer side face 72 when the insert 5 is received in the space 39 together with the spacer 7. An insert side face 51 of the insert 5 which face has another slit (not shown) for forming the second flexible fence 1052 is provided so as to be flush with a spacer side face 71 (not shown) when the insert 5 is received in the space 39 together with the spacer 7.

When received in the space 39, a contour of the spacer 7 is generally or completely the same as an outline shape of the inert 5. The space 7 is provided with a hole (not shown) aligned with the hole 59 of the insert 5 and the hole 391 of the space 39 for receiving a screw.

When the insert 5 is assembled with the spacer 7 before being received in the space 39, a length Li between the outer surface 58 of the insert 5 and a surface 77 of the space 7 that are not in contact each other creates a length Li which is equal to or longer than the length (the depth) Ls of the space 39. A difference between the length Li of the insert 5 and the spacer 7 before being received into the space 39 and the length (the depth) Ls of the space 39 is preferably smaller than or equal to 1.0mm, more preferably greater than or equal to 0.0mm and smaller than or equal to 0.5mm, still more preferably smaller than or equal to 0.3mm and particularly smaller than or equal to 0.2mm.

A gap between the insert 5 and the spacer 7 when being received in the space 39 is less than or equal to 0.05mm, preferably less than or equal to 0.04mm for avoid a rubber flashing after curing.

Any material able to resist force applied during vulcanization and possible to exert the spring characteristics, for example metal, ceramic, resin (such as synthetic resin, for example), elastomeric material, plastic, composite material or mixture of these materials, is usable as a material for making the spring for the spacer 7.

Both the insert 5 and the spacer 7 may be covered completely or partly with a non-stick material or coating for better and easier demolding. The non-stick material is, for example xylane.

Since the insert 5 is received in the space 39 together with at least one spacer 7 in a form of a leaf spring, a disc spring, a flat spring or a combination of these springs, a difference in thickness between the insert 5 and the space 39 receiving the insert 5 in a molding element 1 can be filled up or compensated by the spring characteristics (deformation) of the spacer 7 leading better quality of the tread 101 with the flexible fence 1051, 1052 of the closing device 105 as the spacer 7 in the form of the leaf spring would be compressed when received in the space 39 and changes its form to fill a gap between the insert 5 and the molding element 1. As the difference in thickness between the insert 5 and the space 39 receiving the insert 5 in the molding element 1 can be filled up or compensated thanks to the spring characteristics of the spacer 7, productivity of the molding element is maintained.

Since the spacer 7 has at least two surfaces 77, 78 intended to be in contact with the insert 5 and/or a face 38 of the groove forming rib portion 3 facing to or defining the space 39, a gap between the spacer 7 and the insert 5 and/or between the spacer 7 and the face 38 of the groove forming rib portion 3 facing to the space 39 can easily be maintained for not having a rubber flashing not only on a contact face 102 but also in a groove 103 close to the closing device 105 leading further better quality of the tread 101 with the flexible fence 1051, 1052 of the closing device 105.

Since the difference between the total thickness Li of the insert 5 and the spacer 7 before being received into the space 39 and the length (the depth) Ls of the space 39 is less than or equal to 1.0mm, a deformation of the spacer 7 due to compression subjected upon being received into the space 39 may not affect a form of the groove 103 after curing, and may not affect the slit in the insert 5 for folding the flexible fence 1051, 1052 of the closing device 105 resulting maintained high quality of the tread 101 after curing.

This difference between the total thickness Li of the insert 5 and the spacer 7 before being received into the space 39 and the length (the depth) Ls of the space 39 is preferably greater than or equal to 0.0mm and smaller than or equal to 0.5mm, more preferably smaller than or equal to 0.3mm and still more preferably smaller than or equal to 0.2mm.

Since the gap between the insert 5 and the spacer 7 when received into the space 39 is less than or equal to 0.05mm, it is possible to have further high quality of the tread 101 with the flexible fence 1051, 1052 of the closing device 105 as it is possible to avoid a rubber flashing from such the gap after curing. This gap between the insert 5 and the spacer 7 when received into the space 39 is preferably smaller than or equal to 0.04mm.

The spacer 7 may be attached to the insert 5 inversely before being received into the space 39, that is to say two lateral ends of the spacer 7 contact with the insert 5 before being received into the space 39.

A molding element according to a second embodiment of the present invention will be described referring to Fig.8. Fig.8 is a schematic top view of a spacer according to the second embodiment of the present invention. The constitution of the second embodiment is similar to that of the first embodiment other than the arrangement shown in Fig.8, thus description will be made referring to Fig.8.

In the second embodiment, a spacer 27 includes two parts, a bended part 27a and a flat part 27b, and the bended part 27a and the flat part 27b are joined at an interface 74. The bended part 27a bends at two bended portions 276, 276. In use when being received into the space 39 together with the insert 5, the bended part 27a changes its shape to almost or completely flat so as to be integrated with or conform to the flat part 27b, thus a spacer top face 273 will be flush with an insert top face 53, two spacer side faces 271, 272 will be flush with two insert side faces 51, 52 respectively. Two surfaces 277, 278 of the spacer 27 would contact to the insert 5 or to the molding element 1.

Since the spacer 27 includes two parts, it is possible to have high quality of the tread 101 with the flexible fence 1051, 1052 of the closing device 105 as it is possible to achieve improved contact of the spacer 7 with the insert 5 or with the molding element by using deformable portion (the bended part 27a) and non-deformable portion (the flat part 27b) separated each other.

A molding element according to a third embodiment of the present invention will be described referring to Fig.9 and Fig.10. Fig.9 is a schematic top view of a spacer according to the third embodiment of the present invention. Fig. 10 is a schematic side view of the insert with the spacer and a supporting plate before being received in a space according to the third embodiment of the present invention. The constitution of this third embodiment is similar to that of the first embodiment other than the arrangement shown in Fig.9 and Fig. 10, thus description will be made referring to Fig.9 and Fig. 10.

In the third embodiment, a spacer 37 includes two bended parts 37a, 37b joined at an interface 374. Each the bended parts 37a, 37b bend at two bended portions 376, 376, as shown in Fig.9. In use, when being received into the space 39 together with the insert 5, the bended parts 37a, 37b change their shape to almost or completely flat shape so as to be aligned and stacked each other, thus a spacer top face 373 will be flush with an insert top face 53, and two spacer side faces 371, 372 will be flush with two insert side faces 51, 52, respectively. Two surfaces 377, 378 of the spacer 37 would contact to the insert 5 or to the molding element 1.

As shown in Fig. 10, the insert 5 is arranged so as to be integrated with the spacer 37 and a supporting plate 9. A surface 57 of the insert 5 contacts with a surface 378 of the spacer 37, and the supporting plate 9 contacts with a surface 377 of the spacer 37. When the insert 5 is received in the space 39 together with the spacer 37 and the supporting plate 9, the spacer 37 changes its shape to almost or completely flat shape, thus the surface 57 of the insert 5 contacts almost completely with the surface 378 of the spacer 37, the supporting plate 9 contacts almost completely with the surface 377 of the spacer 37.

The insert 5 includes an insert top face 53 having a slit for forming the first flexible fence 1051 (not shown) and being flush with a spacer top face 373 when the insert 5 is received in the space 39 together with the spacer 37 and the supporting plate 9. The insert 5 also includes an insert side face 52 having a slit 521 for forming the second flexible fence 1052 and being flush with a spacer side face 372 when the insert 5 is received in the space 39 together with the spacer 37 and the supporting plate 9. The insert 5 also includes an insert side face 51 having another slit for forming the second flexible fence 1052 (not shown) and being flush with a spacer side face 371 (not shown) when the insert 5 is received in the space 39 together with the spacer 37 and the supporting plate 9.

When received in the space 39, the spacer 37 and the supporting plate 9 have generally or completely the same contour as the inert 5.

Since the insert 5 is received in the space 39 together with the spacer 37 and at least one supporting plate 9, it is possible to have high quality of the tread 101 with the flexible fence 1051, 1052 of the closing device 105 as it is possible to have good contact of the insert 5 together with the spacer 37 and the supporting plate 9 to the molding element 1 by using deformable portion (the spacer 37) and non-deformable portion (the supporting plate 9) separated each other. In such the case that the insert 5 is provided together with the spacer 37 and the supporting plate 9, the total thickness Li of the insert and the spacer should also consider the supporting plate 9 in its length.

Two supporting plates may be provided so as to sandwich both the insert 5 and the spacer 37. The supporting plate 9 also may be provided between the insert 5 and the spacer 37.

### [Reference Signs List]

- 1: molding element
- 11, 12: side face
- 2: base portion
- 21: molding surface
- 3: groove forming rib portion
- 31, 32: rib side face
- 33: rib top face
- 38: end surface
- 39: space
- 391: hole
- 5: insert
- 51, 52: insert side face
- 521: slit
- 53: insert top face
- 57, 58: surface
- 59: hole
- 7, 27, 37: spacer
- 71, 72, 271, 272, 371, 372: spacer side face
- 73: spacer top face
- 74,374: interface
- 76, 276, 376: bended portion
- 77, 78, 277, 278, 377, 378: surface
- 9: supporting plate
- 101: tread
- 102: contact face
- 103: groove
- 1031, 1032: groove side face
- 1033: groove bottom
- 104: contacting element
- 105: closing device
- 1051, 1052: flexible fence
- 106: contact patch

## Claims

1. A molding element (1) for a mold used for manufacturing a tread (101) of a tire having a plurality of contacting element (104) delimited by a plurality of grooves (103), the molding element (1) having a molding surface (21) for forming a contact face (102) of the contacting elements (104) intended to come into contact with ground during rolling and a groove forming rib portion (3) for forming the groove (103) between adjacent contacting elements (104) comprising two opposed rib side faces (31, 32) for forming two opposed groove side faces (1031, 1032) and a rib top face (33) connecting two rib side faces (31, 32) for forming a groove bottom (1033), the groove forming rib portion (3) comprising at least one space (39) of a depth Ls opening to at least one of the rib side faces (31, 32) and/or to the rib top face (33) and an insert (5) being received in the space (39) for forming a portion of the groove (103) and a closing device (105) in the groove (103),
the molding element being **characterized in that** the insert comprises at least two slits (521), at least one slit (521) opening to one of insert side faces (51, 52) for forming at least one second flexible fence (1052) and another slit (521) opening to an insert top face (53) for forming a first flexible fence (1051),
wherein the insert (5) is received in the space (39) together with at least one spacer (7) in a form of a leaf spring, a disc spring, a flat spring or a combination of these springs, the insert (5) and the spacer (7) before being received into the space (39) having a total thickness Li, wherein the spacer (7) has at least two surfaces (77, 78) intended to be in contact with the insert (5) and/or a face of the groove forming rib portion (3) defining to the space (39), and wherein the spacer (7) has no communication with the slits (521) in the insert (5) for forming the first flexible fence (1051) and the second flexible fence (1052) of the closing device (105).

2. The molding element (1) according to claim 1, **wherein** the total thickness Li of the insert and the spacer before being received into the space is larger than or equal to the depth Ls of the space, a difference between total thickness Li of the insert (5) and the spacer (7) before receiving into the space (39) and a depth Ls of the space (39) is smaller than or equal to 1.0mm.

3. The molding element (1) according to claim 1 or claim 2, **wherein** a gap between the insert (5) and the spacer (7) when received into the space (39) is smaller than or equal to 0.05mm.

4. The molding element (1) according to any one of the claims 1 to 3, **wherein** the insert (5) is received in the space (39) together with the spacer (7) and at least one supporting plate (9).

5. A mold for vulcanizing and molding a tread for a tire, **wherein** the mold comprises at least one molding element (1) according to any one of the claims 1 to 4.

## Patentansprüche

1. Formelement (1) für eine Form, die zum Herstellen einer Lauffläche (101) eines Reifens mit einer Vielzahl von Kontaktelement (104), die durch eine Vielzahl von Rillen (103) begrenzt werden, verwendet wird, wobei das Formelement (1) eine Formoberfläche (21) zum Bilden einer Kontaktfläche (102) der Kontaktelemente (104), die während des Rollens mit dem Boden in Kontakt kommen sollen, und einen rillenbildenden Rippenabschnitt (3) zum Bilden der Rille (103) zwischen benachbarten Kontaktelementen (104), der zwei gegenüberliegende Rippenseitenflächen (31, 32) zum Bilden von zwei gegenüberliegenden Rillenseitenflächen (1031, 1032) und eine obere Rippenfläche (33), die die zwei Rippenseitenflächen (31, 32) verbindet, zum Bilden eines Rillenbodens (1033) umfasst, aufweist, wobei der rillenbildende Rippenabschnitt (3) mindestens einen Raum (39) einer Tiefe Ls, der sich zu mindestens einer der Rippenseitenflächen (31, 32) und/oder zur oberen Rippenfläche (33) öffnet, und einen Einsatz (5), der zum Bilden eines Abschnitts der Rille (103) und einer Schließvorrichtung (105) in der Rille (103) im Raum (39) aufgenommen ist,
wobei das Formelement **dadurch gekennzeichnet** ist, indem der Einsatz (5) mindestens zwei Schlitzen (521)umfasst, wobei sich mindestens ein Schlitz (521) zum Bilden von einem zweiten flexiblen Zaun (1052) zu einer von Einsatzseitenflächen (51, 52) öffnet und wobei sich ein anderer Schlitz (521) zum Bilden eines ersten flexiblen Zauns (1051) zu einer oberen Einsatzfläche (53) öffnet,
wobei der Formelementeinsatz (5) zusammen mit mindestens einem Abstandhalter (7) in Form einer Blattfeder, einer Tellerfeder, einer Flachfeder oder einer Kombination dieser Federn im Raum (39) aufgenommen ist, der Einsatz (5) und der Abstandhalter (7) eine Gesamtdicke Li aufweisen, bevor sie in den Raum (39) aufgenommen werden, wobei der Abstandhalter (7) mindestens zwei Oberflächen (77, 78) aufweist, die mit dem Einsatz (5) und/oder einer Fläche des rillenbildenden Rippenabschnitts (3), der den Raum (39) definiert, in Kontakt sein sollen, und wobei der Abstandhalter (7) mit den Schlitzen (521) im Einsatz (5) zum Bilden des ersten flexiblen Zauns (1051) und des zweiten flexiblen Zauns (1052) der Schließvorrichtung (105) nicht in Kommunikation steht.

2. Formelement (1) nach Anspruch 1, wobei die Gesamtdicke Li des Einsatzes und des Abstandhalters, bevor sie in den Raum aufgenommen werden, größer als oder gleich der Tiefe Ls des Raums ist, eine Differenz zwischen der Gesamtdicke Li des Einsatzes (5) und des Abstandhalters (7), bevor sie in den Raum (39) aufgenommen werden, und der Tiefe Ls des Raums (39) kleiner als oder gleich 1,0 mm ist.

3. Formelement (1) nach Anspruch 1 oder 2, wobei ein Spalt zwischen dem Einsatz (5) und dem Abstandhalter (7) kleiner als oder gleich 0,05 mm ist, wenn sie in den Raum (39) aufgenommen sind.

4. Formelement (1) nach einem der Ansprüche 1 bis 3, wobei der Einsatz (5) zusammen mit dem Abstandhalter (7) und mindestens einer Stützplatte (9) in den Raum (39) aufgenommen ist.

5. Form zum Vulkanisieren und Formen einer Lauffläche für einen Reifen, wobei die Form mindestens ein Formelement (1) nach einem der Ansprüche 1 bis 4 umfasst.

## Revendications

1. Elément de moulage (1) pour un moule utilisé pour fabriquer une bande de roulement (101) d'un pneu ayant une pluralité d'éléments de contact (104) délimités par une pluralité de rainures (103), l'élément de moulage (1) ayant une surface de moulage (21) pour former une face de contact (102) des éléments de contact (104) prévus pour venir en contact avec le sol pendant le roulement et une partie de nervure de formation de rainure (3) pour former la rainure (103) entre les éléments de contact (104) adjacents comprenant deux faces latérales de nervure (31, 32) opposées pour former deux faces latérales de rainure (1031, 1032) opposées et une face supérieure de nervure (33) raccordant deux faces latérales de nervure (31, 32) pour former un fond de rainure (1033), la partie de nervure de formation de rainure (3) comprenant au moins un espace (39) d'une profondeur Ls s'ouvrant sur au moins l'une des faces latérales de nervure (31, 32) et/ou sur la face supérieure de nervure (33) et un insert (5) étant reçu dans l'espace (39) pour former une partie de la rainure (103) et un dispositif de fermeture (105) dans la rainure (103),
l'élément de moulage étant étant **caractérisé en ce que** l'insert (5) comprend au moins deux fentes (521), au moins une fente (521) s'ouvrant sur l'une des faces latérales d'insert (51, 52) pour former au moins une seconde barrière flexible (1052) et une autre fente (521) s'ouvrant sur une face supérieure d'insert (53) pour former une première barrière flexible (1051),
dans lequel l'insert (5) est reçu dans l'espace (39) conjointement avec au moins un dispositif d'espacement (7) se présentant sous la forme d'un ressort à lames, d'un ressort à disque, d'un ressort plat ou d'une combinaison de ces ressorts, l'insert (5) et le dispositif d'espacement (7) avant d'être reçus dans l'espace (39), ayant une épaisseur totale Li, dans lequel le dispositif d'espacement (7) a au moins deux surfaces (77, 78) prévues pour être en contact avec l'insert (5) et/ou une face de la partie de nervure de formation de rainure (3) définissant l'espace (39), et dans lequel le dispositif d'espacement (7) n'a aucune communication avec les fentes (521) dans l'insert (5) pour former la première barrière flexible (1051) et la seconde barrière flexible (1052) du dispositif de fermeture (105).

2. Elément de moulage (1) selon la revendication 1, dans lequel l'épaisseur totale Li de l'insert et du dispositif d'espacement avant d'être reçus dans l'espace, est supérieure ou égale à la profondeur Ls de l'espace, une différence entre l'épaisseur totale Li de l'insert (5) et du dispositif d'espacement (7) avant d'être reçus dans l'espace (39) et une profondeur Ls de l'espace (39) est inférieure ou égale à 1,0 mm.

3. Elément de moulage (1) selon la revendication 1 ou la revendication 2, dans lequel un interstice entre l'insert (5) et le dispositif d'espacement (7), lorsqu'ils sont reçus dans l'espace (39), est inférieur ou égal à 0,05 mm.

4. Elément de moulage (1) selon l'une quelconque des revendications 1 à 3, dans lequel l'insert (5) est reçu dans l'espace (39) conjointement avec le dispositif d'espacement (7) et au moins une plaque de support (9).

5. Moule pour vulcaniser et mouler une bande de roulement pour un pneu, dans lequel le moule comprend au moins un élément de moulage (1) selon l'une quelconque des revendications 1 à 4.
